# EUROPEAN PATENT SPECIFICATION

(11) **EP 4 471 964 B1**
(45) Date of publication and mention of the grant of the patent: **05.08.2026**
(21) Application number: 23860893.9
(22) Date of filing: 30.08.2023
(51) Int. Cl.: H01M 50/403, H01M 50/449, H01M 50/411, H01M 50/491, H01M 50/46, H01M 10/052, H01M 50/414, H01M 50/417, H01M 50/423, H01M 50/489

(54) **SEPARATOR FOR LITHIUM-SULFUR BATTERY, LITHIUM-SULFUR BATTERY COMPRISING THE SEPARATOR, AND METHOD OF MANUFACTURING THE SEPARATOR**
SEPARATOR FÜR EINE LITHIUM-SCHWEFEL-BATTERIE, LITHIUM-SCHWEFEL-BATTERIE UMFASSEND DEN SEPARATOR UND VERFAHREN ZUR HERSTELLUNG DES SEPARATORS
SÉPARATEUR POUR BATTERIE LITHIUM-SOUFRE, BATTERIE LITHIUM-SOUFRE COMPRENANT LE SÉPARATEUR ET PROCÉDÉ DE FABRICATION DU SÉPARATEUR

(30) Priority: 31.08.2022 KR 20220110367
(43) Date of publication of application: 04.12.2024
(73) Proprietor: LG Energy Solution, Ltd., Seoul 07335 (KR); Seoul National University R&DB Foundation, Seoul 08826 (KR)
(72) Inventor: KIM, Soo-Hyun, Daejeon 34122 (KR); LEE, Jong-Chan, Seoul 08830 (KR); KIM, Ki-Hyun, Daejeon 34122 (KR); SOHN, Kwon-Nam, Daejeon 34122 (KR); KOONG, Chan-Yeong, Seoul 08789 (KR); JEONG, Da-Un, Seoul 01417 (KR); HONG, Dong-Gi, Seoul 08792 (KR)
(74) Representative: Goddar, Heinz J.
(86) International application number: PCT/KR2023/012929
(87) International publication number: WO 2024/049217

(56) References cited:
- KR-A- 20160 057 007
- KR-A- 20160 140 260
- KR-A- 20190 052 249
- KR-A- 20190 118 733
- KR-A- 20200 102 958
- US-A1- 2007 281 206
- US-A1- 2015 207 123

## Description

### TECHNICAL FIELD

The present disclosure relates to a separator capable of suppressing migration of polysulfide eluted from a positive electrode to increase the life and a secondary battery comprising the same, and to a method of manufacturing the separator.

### BACKGROUND ART

With the technology development and growing demand for mobile devices, there is a growing demand for secondary batteries as an energy source, and among secondary batteries, lithium secondary batteries are brought to market and being widely used due to high energy density and working potential, long cycle life and low self-discharge rate.

Recently, with the rising interest in environmental issues, many studies are being conducted on electric vehicles (EV) and hybrid electric vehicles (HEV) as an alternative to vehicles using fossil fuels such as gasoline vehicles and diesel vehicles that are regarded as one of the main causes of air pollution. Lithium secondary batteries having high energy density, high discharge voltage and output stability are mainly studied and used as a power source of electric vehicles and hybrid electric vehicles.

Lithium secondary batteries have a structure in which an electrode assembly includes a positive electrode and a negative electrode, each electrode including an electrode current collector and an active material coated on the electrode current collector, with a porous separator interposed between the positive electrode and the negative electrode, and a nonaqueous electrolyte comprising a lithium salt is wetted to the electrode assembly.

At the present time, the lithium secondary battery market is governed by technology based on pairing of lithium cobalt oxide LiCoO2 at the positive electrode and graphite at the negative electrode. The rated voltage of lithium secondary batteries is about 3.6V, while the rated voltage of most of other types of batteries (Ni-Cd, Ni-MH, etc.) is 1.5V. The energy density per volume and the energy density per mass are about 300 to 500 Wh/l and 160 to 200 Wh/kg, respectively. This value is the highest value among all the batteries now in the market. Additionally, this type of batteries has low self-discharge and long life (500 or 1000 cycles). Despite the surprising performance achievement, there is not much difference in performance between all the current lithium ion batteries, and it is foreseen that improvement will take place only to a very limited extent.

Accordingly, lithium-sulfur (Li-S) batteries are emerging as an alternative to the known lithium ion batteries.

In the same way as lithium ion secondary batteries, lithium-sulfur batteries work by lithium ions moving in the electrolyte between the positive electrode and the negative electrode. However, since lithium-sulfur batteries simply use sulfur, as opposed to lithium ion secondary batteries designed to store energy by intercalation reaction of lithium ions into molecules of the electrode active material, inducing changes in electrode structure, lithium-sulfur batteries work based on oxidation and reduction reaction between sulfur and lithium ions. Accordingly, compared to lithium ion secondary batteries, lithium-sulfur batteries may have theoretically higher capacity at the equal volume without limitations on the electrode structure. Due to this feature, in lithium-sulfur batteries comprising the sulfur positive electrode and the lithium metal negative electrode, when it is assumed that elemental sulfur (S₈) having ring structure is completely reduced to lithium polysulfide (Li₂S), the theoretical capacity is 1,675 mAh/g and the theoretical energy density is 2,600 Wh/kg that are higher 3 times to 6 times than the existing other battery systems (Ni/MH batteries: 450 Wh/kg, Li/FeS: 480 Wh/kg, Li/MnO2: 1,000 Wh/kg, Na/S: 800 Wh/kg).

On the other hand, the existing transition metal oxide based lithium ion secondary batteries may be thought to be batteries comprising materials that are the sources of heavy metal contamination since they comprise oxides of nickel (Ni), cobalt (Co) and manganese (Mn) having higher density than the density of heavy metal (5 g/mL or more of metal) in the positive electrode. However, lithium-sulfur batteries are free of materials causing contamination and comprise nontoxic materials, and from this perspective, they are considered to be eco-friendly. Additionally, the positive electrode material, sulfur, is abundant on Earth and inexpensive.

Meanwhile, in lithium-sulfur batteries, reduction reaction of sulfur and oxidation reaction of lithium metal occurs during discharging, and in this instance, sulfur forms lithium polysulfide (LiPS) of linear structure from S₈ of ring structure, and lithium-sulfur batteries show stepwise discharge voltage until the lithium polysulfide is completely reduced to Li₂S. However, while lithium-sulfur batteries are charged/discharged, charge/discharge efficiency reduces and battery life degrades. As described above, life degradation of lithium-sulfur batteries is caused by many different factors such as side reaction of electrolyte solutions, instability of lithium metal, and accumulation of positive electrode by-products (for example, elution of lithium polysulfide from the positive electrode).

That is to say, in lithium-sulfur batteries using the sulfur based compound for the positive electrode active material and alkaline metal such as lithium for the negative electrode active material, elution of lithium polysulfide occurs during charging/discharging, and the lithium polysulfide eluted from the positive electrode migrates to the negative electrode, which reduces the capacity of the lithium-sulfur batteries and shortens the life of the lithium-sulfur batteries. That is to say, since the lithium polysulfide eluted from the positive electrode has high solubility in the electrolyte solution, the lithium polysulfide may unintentionally migrate to the negative electrode through the separator via the electrolyte solution, causing irreversible loss of the positive electrode active material and the consequential capacity fading, and sulfur particle accumulation on lithium metal surface induced by side reaction, resulting in shorter battery life.

To solve the life reduction problem caused by lithium polysulfide, in the technical field, studies have been conducted on the addition of lithium polysulfide absorbent materials to the positive electrode composite or reaction mitigating materials to the negative electrode to prevent side reaction on lithium metal surface, but did not produce meaningful outcomes.

US 2015/207123 A1 discloses the preparation of polyamic acid solution, wherein 3,3'-diaminodiphenylsulfone and N,N-dimethylacetamide are placed in a flask and dissolved with stirring. Pyromellitic dianhydride in a solid state is added to the solution, and the solution is vigorously stirred. The solid content by mass ratio is 20% by weight, and the reaction proceeds for 24 hours whilst maintaining the temperature at less than 25°C to prepare a polyamic acid solution. In order to prepare an inorganic dispersion, aluminum oxide is added to acetone and milled at 25°C for 3 hours using a bed's mill to be dispersed, thereby preparing an inorganic dispersion. The thus prepared polyamic acid solution and inorganic dispersion are mixed in a weight ratio of polyamic acid solution:N,N-dimethylacetamide:inorganic dispersion:acetone = 0.9:1.1:4.1:4. The thus prepared coating agent is coated on both surfaces of a single polyethylene substrate film.

US 2007/281206 A1 discloses coating a PE separator with a NMP solution of polyamic acid by adding anhydrous trimellitic acid monochloride and diaminodiphenylether to NMP, and mixing at room temperature. In the NMP solution of polyamic acid are dispersed 200 parts by weight of alumina per 100 parts by weight of polyamic acid to prepare a coating liquid which is then coated on a porous polyethylene film.

US 2015/207123 A1 discloses the preparation of polyamic acid solution, wherein 3,3'-diaminodiphenylsulfone and N,N-dimethylacetamide are placed in a flask and dissolved with stirring. Pyromellitic dianhydride in a solid state is added to the solution, and the solution is vigorously stirred. The solid content by mass ratio is 20% by weight, and the reaction proceeds for 24 hours whilst maintaining the temperature at less than 25°C to prepare a polyamic acid solution. In order to prepare an inorganic dispersion, alumina is added to acetone and milled at 25°C for 3 hours using a beads mill to be dispersed, thereby preparing an inorganic dispersion. The thus prepared polyamic acid solution and inorganic dispersion are mixed in a weight ratio of polyamic acid solution:N,N-dimethylacetamide:inorganic dispersion:acetone = 0.9:1.1:4.1:4. The thus prepared coating agent is coated on both surfaces of a single polyethylene substrate film.

US 2007/281206 A1 discloses coating a PE separator with a NMP solution of polyamic acid by adding anhydrous trimellitic acid monochloride and diaminodiphenylether to NMP, and mixing at room temperature. In the NMP solution of polyamic acid are dispersed 200 parts by weight of alumina per 100 parts by weight of polyamic acid to prepare a coating liquid which is then coated on a porous polyethylene film.

### SUMMARY

### Technical Problem

An embodiment of the present disclosure is directed to providing a separator capable of preventing elution and migration of lithium polysulfide from a positive electrode to a negative electrode to improve the life of a lithium-sulfur battery.

Another embodiment of the present disclosure is directed to providing a lithium-sulfur battery comprising the separator.

Still another embodiment of the present disclosure is directed to providing a method of manufacturing the separator.

Additionally, it will be easily understood that these and other objectives and advantages of the present disclosure can be realized by the means or methods set forth in the appended claims and their combination.

### Technical Solution

To solve the above-described problem of the present disclosure, there are provided a separator, a lithium-sulfur battery comprising the separator and a method of manufacturing the separator according to the following embodiments.

According to a first embodiment, there is provided the separator for a lithium-sulfur battery according to claim 7.

According to a second embodiment, in the first embodiment, the mole ratio of the carboxyl functional group and the amide functional group may be 1:0.75 to 1:3.

According to a third embodiment, in the first or second embodiment, the polyamide acid compound may be a polymer having a unit having the carboxyl functional group and the amide functional group as a repeating unit.

According to a fourth embodiment, in any one of the first to third embodiments, a molar concentration (mmol/L) of the carboxyl functional group may be 5 to 15, and a molar concentration of the amide functional group may be 8 to 20.

According to a fifth embodiment, in any one of the first to fourth embodiments, a Poly Dispersity Index (PDI) of the polyamide acid may be 2.6 to 3.2.

According to a sixth embodiment, there is provided the lithium-sulfur battery according to claim 7, comprising a positive electrode, a negative electrode, and a separator interposed between the positive electrode and the negative electrode, wherein the separator is the separator for the lithium-sulfur battery according to any one of the first to sixth embodiments.

According to a seventh mbodiment, there is provided the method of manufacturing a separator for a lithium-sulfur battery according to claim 1.

According to an eighth embodiment, in the seventh embodiment, the mole ratio of the carboxyl functional group and the amide functional group may be 1:0.75 to 1:3.

According to a ninth embodiment, in any one of the seventh or eighth embodiments, an amount of the carboxylic dianhydride compound in the first solution may be 0.2 wt% to 3 wt%, and an amount of the diamine compound in the second solution may be 0.2 wt% to 3 wt%.

According to a tenth embodiment, in any one of the seventh to ninth embodiments, the carboxyl functional group may originate from the carboxylic dianhydride compound, and the amide functional group may originate from the diamine compound.

According to an eleventh embodiment, in the tenth embodiment, the carboxylic dianhydride compound may comprise at least one of 3,3',4,4'-benzophenone tetracarboxylic dianhydride, 3,3',4,4'-diphenyltetracarboxylic dianhydride, 3,3',4,4'-diphenylsulfonetetracarboxylic dianhydride, 2,2-bis[4-(3,4-dicarboxyphenoxy)phenyl]propane dianhydride, 1,2,3,4-benzenetetracarboxylic dianhydride, or naphthalene-1,4,5,8-tetracarboxylic dianhydride, and the diamine compound may comprise at least one of p-phenylene diamine, m-phenylene diamine, 2,2'-bis(trifluoromethyl)-4,4'-biphenyldiamine, 2,2'-dimethyl-4,4'-diaminobenzidine, 4,4'-diaminodiphenyl sulfone, 2,7-diaminofluorene, 4,4-diaminooctafluorobiphenyl, 4,4'-oxydianiline, 2,2'-dimethyl-4,4'-diaminobiphenyl, m-xylylenediamine, p-xylylenediamine or 4,4'-diaminobenzanilide.

According to a twelfth embodiment, in any one of the seventh to eleventh embodiments, dipping the porous polymer substrate in the first solution and dipping the porous polymer substrate in the second solution may be each performed for 40 minutes to 80 minutes.

According to a thirteenth embodiment, in the twelwth embodiment, the method of manufacturing the separator for the lithium-sulfur battery may further comprise, after dipping the porous polymer substrate in the second solution, cleaning the porous polymer substrate; and drying the cleaned porous polymer substrate in a vacuum.

### Advantageous Effects

The separator for the lithium-sulfur battery according to the embodiments of the present disclosure has the coating layer comprising the polyamide acid compound on at least one surface of the porous polymer substrate by dipping the porous polymer substrate in the first solution comprising the carboxylic dianhydride compound and then the second solution comprising the diamine compound. The polyamide acid compound comprises the carboxyl functional group and the amide functional group, and the mole ratio of the carboxyl functional group and the amide functional group is 1:0.5 to 1:5. Since the separator has the coating layer comprising the polyamide acid compound, it may be possible to prevent migration of lithium polysulfide eluted from the positive electrode of the lithium-sulfur battery to the negative electrode. Accordingly, it may be possible to prevent sulfur particle accumulation on the lithium metal surface of the negative electrode, thereby maintaining the charge/discharge capacity of the lithium-sulfur battery and improving the battery life.

Additionally, the polyamide acid of the coating layer is made via in-situ polymerization. The carboxylic dianhydride compound in a monomolecular state is first supplied to the porous polymer substrate, so the carboxylic dianhydride compound may be coated into the pores of the porous polymer substrate. Subsequently, the diamine compound is supplied, causing polymerization reaction in the pores, so the polyamide acid compound may be coated into the pores. Additionally, it may be possible to reduce the interfacial resistance between the coating layer and the porous polymer substrate, thereby achieving higher electrochemical performance.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram illustrating a method of manufacturing a separator for a lithium-sulfur battery according to an embodiment of the present disclosure.
FIG. 2 is a diagram illustrating a method of manufacturing a separator for a lithium-sulfur battery according to example 1.
FIGS. 3 and 4 are graphs showing discharge capacity of lithium-sulfur batteries comprising separators for lithium-sulfur batteries obtained through a manufacturing method according to examples of the present disclosure and separators for lithium-sulfur batteries according to comparative examples.
FIGS. 5 and 6 are images showing thermal stability evaluation results of separators according to example 1 and comparative example 1.
FIG. 7 is a graph showing polysulfide elution suppression of separators according to example 1 and comparative example 1.

### DETAILED DESCRIPTION

Hereinafter, the present disclosure will be described in more detail.

It should be understood that the terms or words used in the specification and the appended claims should not be construed as limited to general and dictionary meanings, but rather interpreted based on the meanings and concepts corresponding to technical aspects of the present disclosure on the basis of the principle that the inventor is allowed to define terms appropriately for the best explanation.

The term "comprise(s)" or "include(s)" when used in this specification, specifies the presence of stated elements, but does not preclude the presence or addition of one or more other elements, unless the context clearly indicates otherwise.

The term "about" or "approximately" is used herein in the sense of at, or nearly at, when given the manufacturing and material tolerances inherent in the stated circumstances and is used to prevent the unscrupulous infringer from unfairly taking advantage of the present disclosure where exact or absolute figures are stated to help better understanding of the present disclosure.

The present disclosure relates to a separator, an electrochemical cell comprising the same and a method of manufacturing the same. In the present disclosure, the electrochemical cell may include any type of battery that generates electrochemical reaction. Specific examples of the electrochemical cell include any type of primary batteries, secondary batteries, fuel cells, solar cells and capacitors such as super capacitors, or the like. In particular, the electrochemical cell may be a secondary battery, and the secondary battery may be a lithium ion secondary battery. The lithium ion secondary battery may include, for example, a lithium-metal battery, a lithium-sulfur battery, an all-solid-state battery, a lithium polymer battery and so on, and among them, a lithium-sulfur battery is preferred.

Among secondary batteries, lithium-sulfur batteries have high discharge capacity and theoretical energy density, and since sulfur used as a positive electrode active material is abundant on Earth and inexpensive, lithium-sulfur batteries require low battery manufacturing costs and are eco-friendly, so they are gaining attention as the next-generation secondary battery.

In the present disclosure, the positive electrode active material comprises a carbon-sulfur composite, and the carbon-sulfur composite comprises a porous carbon material. In the lithium-sulfur battery, since the positive electrode active material, sulfur, is nonconductive, the carbon-sulfur composite, in which a conductive material, for example, a carbon material is combined with sulfur, is commonly used to improve electrical conductivity.

According to an aspect of the present disclosure, there is provided a separator for a lithium-sulfur battery, obtainable by the method of the invention, the separator comprising:
a porous polymer substrate having a plurality of pores; and
a coating layer on at least one surface of the porous polymer substrate, the coating layer comprising an aromatic polyamide acid compound having a carboxyl functional group and an amide functional group,
wherein a mole ratio of the carboxyl functional group and the amide functional group is 1:0.5 to 1:5,
wherein the aromatic polyamide acid compound comprises a chemical structure represented by the following Formula 2 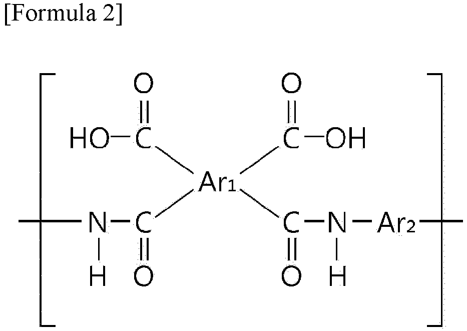 wherein in Formula 2, Ar1 is a quadrivalent aromatic organic group having 6 to 20 carbon atoms, and Ar2 is a divalent aromatic organic group having 6 to 20 carbon atoms.

The porous polymer substrate is not limited to a particular type and may include any type of material that may be used as separator materials of electrochemical devices to electrically insulate the negative electrode from the positive electrode to prevent shorts and provide movement paths of lithium ions. The porous polymer substrate may include, for example, a porous polymer film or a nonwoven fabric comprising at least one of polymer resins such as polyolefin, polyethyleneterephthalate, polybutyleneterephthalate, polyacetal, polyamide, polycarbonate, polyimide, polyetheretherketone, polyethersulfone, polyphenylene oxide, polyphenylenesulfide and polyethylenenaphthalene.

The coating layer is located on at least one surface of the porous polymer substrate, and comprises the polyamide acid compound having the carboxyl functional group and the amide functional group. The carboxyl functional group may originate from a carboxylic dianhydride compound, and the amide functional group may originate from a diamine compound.

In the lithium-sulfur battery, reduction reaction of sulfur and oxidation reaction of lithium metal occurs during discharging, and in this instance, sulfur forms lithium polysulfide (LiPS) of linear structure from S₈ of ring structure, and the lithium-sulfur battery shows stepwise discharge voltage until the lithium polysulfide is completely reduced to Li₂S.

However, during charging/discharging, charge/discharge efficiency of the lithium-sulfur battery reduces and the battery life degrades. As described above, life degradation of the lithium-sulfur battery is caused by many different factors such as side reaction of electrolyte solutions, instability of lithium metal, and accumulation of positive electrode by-products (for example, elution of lithium polysulfide from the positive electrode).

That is to say, in the lithium-sulfur battery using the sulfur based compound for the positive electrode active material and alkaline metal such as lithium for the negative electrode active material, elution of lithium polysulfide occurs during charging/discharging, and the lithium polysulfide eluted from the positive electrode migrates to the negative electrode, which reduces the capacity of the lithium-sulfur battery and shortens the life of the lithium-sulfur battery. That is to say, since the lithium polysulfide eluted from the positive electrode has high solubility in the electrolyte solution, the lithium polysulfide may unintentionally migrate to the negative electrode through the separator via the electrolyte solution, causing irreversible loss of the positive electrode active material and the consequential capacity fading, and sulfur particle accumulation on lithium metal surface induced by side reaction, resulting in shorter battery life.

To solve the life reduction problem caused by lithium polysulfide, in the technical field, studies have been conducted on the addition of lithium polysulfide absorbent materials to the positive electrode composite or reaction mitigating materials to the negative electrode to prevent side reaction on lithium metal surface, but did not produce meaningful outcomes.

Accordingly, to prevent the migration of lithium polysulfide eluted from the positive electrode to the negative electrode and accumulating on the surface of the negative electrode, the present disclosure discloses the separator for the lithium-sulfur battery having the coating layer comprising the polyamide acid compound having the carboxyl functional group and the amide functional group on at least one surface of the porous polymer substrate. Since the polyamide acid compound having the carboxyl functional group and the amide functional group is coated on the porous polymer substrate, it may be possible to prevent the migration of lithium polysulfide eluted from the positive electrode to the negative electrode, thereby improving the life of the lithium-sulfur battery.

According to an embodiment of the present disclosure, the coating layer comprising the polyamide acid compound may be formed on the porous polymer substrate, and the polyamide acid compound having the carboxyl functional group and the amide functional group may be present in the pores of the porous polymer substrate.

In an embodiment, the polyamide acid compound may be a polymer having a unit having the carboxyl functional group and the amide functional group as a repeating unit. Additionally, the polyamide acid compound comprises an aromatic polyamide acid compound, and in the present disclosure, for more uniform and smooth coating on the porous polymer substrate, an aromatic polyamide acid compound having a phenol group capable of forming π-π bonds with the pores of the porous polymer substrate may be selected.

According to an embodiment of the present disclosure, the polyamide acid compound comprises a chemical structure represented by the following Formula 2. Alternatively, the polyamide acid compound comprises a repeating unit represented by the following Formula 2.

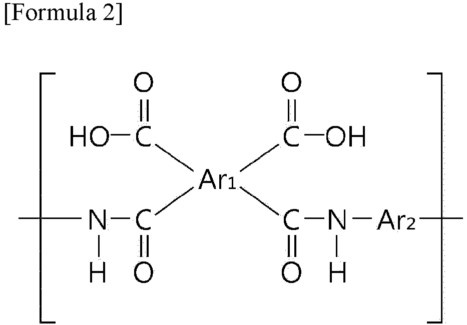

In the above Formula 2, Ar1 is a quadrivalent aromatic organic group having 6 to 20 carbon atoms, and Ar2 is a divalent aromatic organic group having 6 to 20 carbon atoms.

According to an embodiment of the present disclosure, the polyamide acid compound may be benzophenone polyamide acid (BPAA) having the structure of the following Formula 3, or may be naphthalene polyamic acid or pyrene polyamic acid.

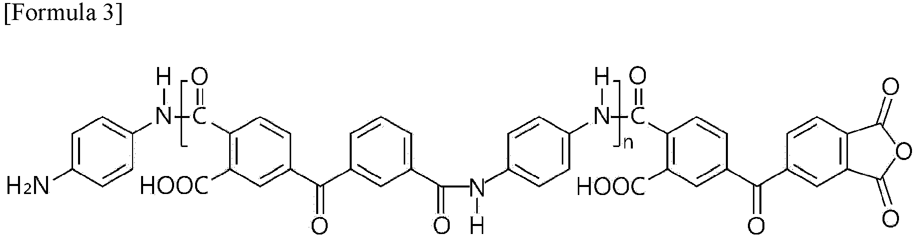

In the above Formula 3, n may be an integer of approximately 3 to 12, or approximately 5 to 10.

In the polyamide acid compound of the present disclosure, the mole ratio of the carboxyl functional group and the amide functional group is 1:0.5 to 1:5. According to an embodiment of the present disclosure, the mole ratio of the carboxyl functional group and the amide functional group may be approximately 1:0.75 to 1:3, approximately 1:0.8 to 1:2, or approximately 1:1 to 1:1.5.

When the mole ratio of the carboxyl functional group and the amide functional group satisfies the above-described range, it is possible to prevent the migration of lithium polysulfide eluted from the positive electrode to the negative electrode, thereby improving the life of the lithium-sulfur battery. When the mole ratio of the carboxyl functional group and the amide functional group is less than 1:0.5 or more than 1:5, it fails to prevent the migration of lithium polysulfide eluted from the positive electrode to the negative electrode, thereby failing to improve the life of the lithium-sulfur battery.

According to an embodiment of the present disclosure, the molar concentration (mmol/L) of the carboxyl functional group may be approximately 5 to 15, or approximately 5 to 8, and the molar concentration (mmol/L) of the amide functional group may be approximately 8 to 20, or approximately 8 to 12. When the molar concentration (mmol/L) of the carboxyl functional group and the amide functional group satisfies the above-described range, it may be possible to prevent the permeation of lithium polysulfide, thereby improving the battery life.

The molar concentration and the mole ratio of the carboxyl functional group and the amide functional group may be measured using a variety of measuring methods known in the technical field. For example, the molar concentration and the mole ratio of the carboxyl functional group and the amide functional group may be measured using 1H-nuclear magnetic resonance (NMR) spectrometer in the following conditions.
- Instrument: AVANCE AC 400FT NMR spectrometer (Bruker)
- Measurement frequency: 400 MHz
- Measurement solvent: DMSO-d6
- Measurement temperature: 25°C

Additionally, the weight average molecular weight of the polyamide acid compound may be approximately 1,000 to 5,000 or approximately 4,000 to 5,000, and Poly Dispersity Index (PDI, a measure of molecular weight distribution) may be approximately 2.6 to 3.2 or approximately 2.7 to 2.9. When the weight average molecular weight and the PDI of the polyamide acid compound satisfies the above-described range, it may be possible to prevent the permeation of lithium polysulfide, thereby improving the battery life.

In this instance, the weight average molecular weight and the PDI may be measured using gel permeation chromatography. Specifically, the PDI may be calculated by measuring each of the number average molecular weight (Mn) and the weight average molecular weight (Mw) by gel permeation chromatography (GPC, PL GPC220, Agilent Technologies) in the following conditions, and dividing the weight average molecular weight by the number average molecular weight.
- Column: PL MiniMixed B x 2
- Solvent: tetrahydrofuran (THF)
- Flow rate: 0.3 ml/min
- Sample concentration: 2.0 mg/ml
- Injection amount: 10 µℓ
- Column temperature: 40°C
- Detector: Agilent RI detector
- Standard: Polystyrene (fitted to a third degree polynominal)
- Data processing: ChemStation

Additionally, according to a specific embodiment of the present disclosure, the separator for the lithium-sulfur battery may further comprise an organic/inorganic composite porous coating layer. The organic/inorganic composite porous coating layer may be located on at least one surface of the porous polymer substrate, and comprise a plurality of inorganic particles and a binder.

According to an aspect of the present disclosure, there is provided a method of manufacturing the separator for the lithium-sulfur battery, comprising:
preparing the porous polymer substrate having the plurality of pores; and
forming the coating layer comprising the aromatic polyamide acid compound having the carboxyl functional group and the amide functional group on at least one surface of the porous polymer substrate,
wherein forming the coating layer comprising the aromatic polyamide acid compound comprises:
   dipping the porous polymer substrate in a first solution comprising the carboxylic dianhydride compound; and
   dipping the porous polymer substrate dipped in the first solution in a second solution comprising the diamine compound, and
   wherein the mole ratio of the carboxyl functional group and the amide functional group is1:0.5 to 1:5,
   wherein when forming the coating layer comprising the aromatic polyamide acid compound on the at least one surface of the porous polymer substrate, the coating layer of the aromatic polyamide acid compound is formed on the at least one surface of the porous polymer substrate, and at the same time, the aromatic polyamide acid compound is present in the pores,
   wherein the aromatic polyamide acid compound comprises a chemical structure represented by the following Formula 2 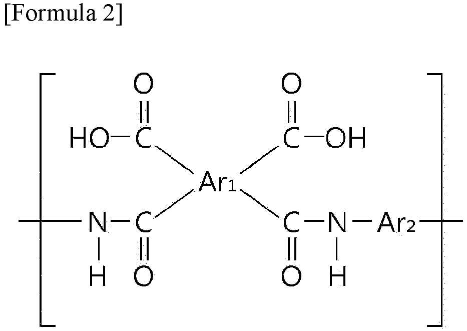
   wherein in Formula 2, Ar1 is a quadrivalent aromatic organic group having 6 to 20 carbon atoms, and Ar2 is a divalent aromatic organic group having 6 to 20 carbon atoms.

Hereinafter, the method of manufacturing the separator for the lithium-sulfur battery according to a specific embodiment of the present disclosure will be described.

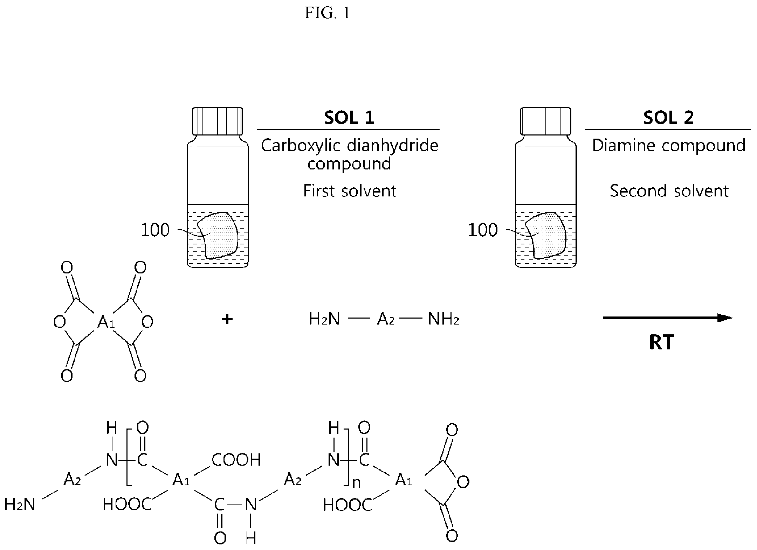

FIG. 1 is a diagram illustrating the method of manufacturing the separator for the lithium-sulfur battery according to an embodiment of the present disclosure.

Referring to FIG. 1, the porous polymer substrate 100 may be prepared. As described above, the porous polymer substrate 100 may include a porous polymer film or a nonwoven fabric comprising at least one of polymer resins such as polyolefin, polyethyleneterephthalate, polybutyleneterephthalate, polyacetal, polyamide, polycarbonate, polyimide, polyetheretherketone, polyethersulfone, polyphenylene oxide, polyphenylenesulfide and polyethylenenaphthalene.

Subsequently, the porous polymer substrate 100 may be dipped in the first solution (SOL1). For example, the porous polymer substrate 100 may be dipped in the first solution (SOL1) for approximately 40 minutes to 80 minutes. The first solution (SOL1) may comprise the carboxylic dianhydride compound, and specifically, the carboxylic dianhydride compound and a first solvent, and the first solvent may include n-methylpyrrolidone (NMP), tetrahydrofuran (THF), dimethylformamide (DMF), acetone, ethanol, water, or a mixture of two or more of them. The amount of the carboxylic dianhydride compound in the first solution (SOL1) may be approximately 0.2 wt% to 3 wt%, or approximately 0.5 wt% to 1 wt%.

In an embodiment, the carboxylic dianhydride compound may comprise at least one of 3,3',4,4'-benzophenonetetracarboxylic dianhydride, 3,3',4,4'-diphenyltetracarboxylic dianhydride, 3,3',4,4'-diphenylsulfonetetracarboxylic dianhydride, 2,2-bis[4-(3,4-dicarboxyphenoxy)phenyl]propane dianhydride, 1,2,3,4-benzenetetracarboxylic dianhydride, or naphthalene-1,4,5,8-tetracarboxylic dianhydride.

For example, the carboxylic dianhydride compound may comprise 3,3',4,4'-benzophenone tetracarboxylic dianhydride (BPTCDA).

The porous polymer substrate 100 dipped in the first solution (SOL1) may be dipped in the second solution (SOL2). For example, the porous polymer substrate 100 may be dipped in the second solution (SOL2) for approximately 40 minutes to 80 minutes. In an embodiment, the second solution (SOL2) may comprise the diamine compound, and specifically, the diamine compound and a second solvent, and the second solvent may include n-methylpyrrolidone (NMP), tetrahydrofuran (THF), dimethylformamide (DMF), acetone, ethanol, water, or a mixture of two or more of them. The amount of the diamine compound in the second solution (SOL2) may be approximately 0.2 wt% to 3 wt% or approximately 0.5 wt% to 1 wt%.

In an embodiment, the diamine compound may comprise at least one of p-phenylene diamine, m-phenylene diamine, 2,2'-bis(trifluoromethyl)-4,4'-biphenyldiamine, 2,2'-dimethyl-4,4'-diaminobenzidine, 4,4'-diaminodiphenyl sulfone, 2,7-diaminofluorene, 4,4-diaminooctafluorobiphenyl, 4,4'-oxydianiline, 2,2'-dimethyl-4,4'-diaminobiphenyl, m-xylylenediamine, p-xylylenediamine or 4,4'-diaminobenzanilide.

For example, the diamine compound may comprise p-phenylene diamine (PDA).

The polyamide acid (for example, the benzophenone polyamide acid (BPAA) of FIG. 1) of the coating layer according to embodiments of the present disclosure is made via in-situ polymerization. In this instance, the process of dipping the porous polymer substrate 100 in the first solution (SOL1) and the second solution (SOL2) may be properly set based on the coating properties of the compound on the porous polymer substrate 100.

In an embodiment, after the porous polymer substrate 100 is dipped in the first solution (SOL1), the second solution (SOL2) may be injected into the porous polymer substrate 100 dipped in the first solution (SOL1) to dip the porous polymer substrate 100 in the second solution (SOL2).

In another embodiment, after the porous polymer substrate 100 is dipped in the first solution (SOL1), the porous polymer substrate 100 coated with the first solution (SOL1) may be taken out and then dipped in the second solution (SOL2).

Additionally, the order of dipping the porous polymer substrate 100 in the first solution (SOL1) and the second solution (SOL2) may be properly set.

In an embodiment, the porous polymer substrate 100 may be first dipped in the first solution (SOL1) and then the second solution (SOL2). In this case, the carboxylic dianhydride compound included in the first solution (SOL1) may have a larger number of phenol groups, forming π-π bonds with the porous polymer substrate 100. Accordingly, since the porous polymer substrate 100 is first dipped in the first solution (SOL1) having a larger number of phenol groups, the bonding strength between the porous polymer substrate 100 and the first solution (SOL1) may be increased.

Subsequently, the porous polymer substrate 100 may be cleaned and dried approximately for 24 hours to remove unreacted products remaining on the surface of the porous polymer substrate 100. For example, the porous polymer substrate 100 may be cleaned through a cleaning agent, for example, ethanol, and dried in a vacuum.

The polyamide acid of the coating layer according to embodiments of the present disclosure may be made via in-situ polymerization. For example, the carboxylic dianhydride compound having the carboxyl functional group may be first supplied to the porous polymer substrate 100, and subsequently, the diamine compound having the amine functional group may be supplied. Since the carboxylic dianhydride compound in a monomolecular state is first suppled to the porous polymer substrate 100, the carboxylic dianhydride compound may be uniformly coated into the pores of the porous polymer substrate 100. Subsequently, the diamine compound may be supplied, causing polymerization reaction in the pores, and accordingly the polyamide acid compound may be coated in the pores more uniformly. Additionally, interfacial resistance between the coating layer and the porous polymer substrate 100 may reduce, thereby achieving higher electrochemical performance.

Additionally, the carboxyl functional group and the amide functional group are present in the polyamide acid of the coating layer according to embodiments of the present disclosure. In other words, polyimide may be synthesized by imidization of the polyamide acid, and the coating layer of the present disclosure comprises un-imidized polyamide acid. Accordingly, the carboxyl functional group and the amide functional group may be still present in the polyamide acid of the coating layer, and the separator having the coating layer may suppress the migration of lithium polysulfide, thereby increasing the life of the lithium-sulfur battery.

Hereinafter, examples will be described in detail to help better understanding of the present disclosure. However, the examples according to the present disclosure may be modified in many other forms, and the scope of the present disclosure should not be interpreted as being limited to the following examples. The examples of the present disclosure are provided to fully explain the present disclosure to persons having ordinary skill in the art.

### Example 1

### Positive electrode

For a positive electrode active material, a carbon-sulfur composite in which carbon nanotubes (CNT):sulfur (S) were mixed at a weight ratio of 1:3 was used. The carbon-sulfur composite was mixed with a PAA binder at a weight ratio of 96:4 to prepare a positive electrode slurry, the positive electrode slurry was uniformly coated on an aluminum foil to the thickness of 300µm, dried at 55°C and cut into 11 pi diameter to prepare a positive electrode.

### Negative electrode and electrolyte

For a negative electrode, lithium metal was used, and 1.0 M LiNO₃ was added to a mixed solvent of 1,3-dioxolane (DOL) and 1,2-dimethylether at a volume ratio (v/v) of 50 : 50 to prepare an electrolyte solution for a lithium-sulfur secondary battery.

### Separator

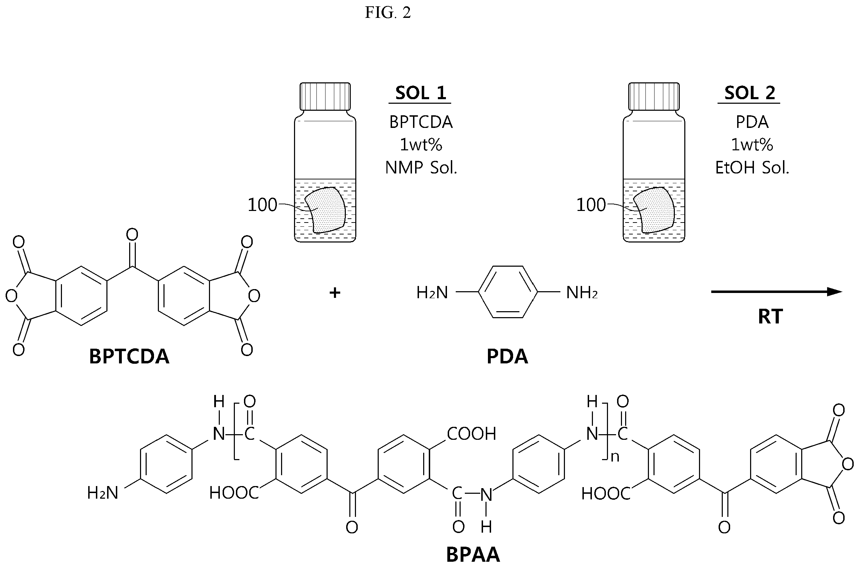

FIG. 2 shows a process of manufacturing a separator of example 1.

Referring to FIG. 2, a polyethylene porous film (Celgard 2320) as a porous polymer substrate was prepared, a first solution (SOL1) comprising 1 wt% of 3,3'4,4'-benzophenone tetracarboxylic dianhydride (BPTCDA) as a carboxylic dianhydride compound in n-methylpyrrolidone (NMP) as a first solvent was prepared, and a second solution (SOL2) comprising 1 wt% of p-phenylenediamine (p-PDA) as a diamine compound in ethanol as a second solvent was prepared.

First, the porous polymer substrate was dipped in the prepared first solution (SOL1) for 1 hour and the second solution (SOL2) was injected into the porous polymer substrate. As a result, a separator having a coating layer comprising benzophenone polyamide acid (BPAA) made via in-situ polymerization on two surfaces of the porous polymer substrate was prepared.

In this instance, in the benzophenone polyamide acid (BPAA), the molar concentration (mmol/L) of the carboxyl functional group was 6.27, and the molar concentration (mmol/L) of the amide functional group was 9.34. Thus, the mole ratio of the carboxyl functional group and the amide functional group was 1: 1.5.

A 2032 Coin Type lithium-sulfur battery was prepared using the positive electrode, the negative electrode, the electrolyte and the separator.

### Example 2

### Positive electrode, negative electrode and electrolyte

A positive electrode, a negative electrode and an electrolyte were prepared by the same method as example 1.

### Separator

A polyethylene porous film (Celgard 2320) as a porous polymer substrate was prepared, a first solution comprising 0.5 wt% of 3,3'4,4'-benzophenone tetracarboxylic dianhydride (BPTCDA) as a carboxylic dianhydride compound in n-methylpyrrolidone (NMP) as a first solvent was prepared, and a second solution comprising 1 wt% of p-phenylenediamine (p-PDA) as a diamine compound in ethanol as a second solvent was prepared.

First, the porous polymer substrate was dipped in the prepared first solution for 1 hour, and the second solution was injected into the porous polymer substrate. As a result, a separator having a coating layer comprising benzophenone polyamide acid (BPAA) made via in-situ polymerization on two surfaces of the porous polymer substrate was prepared.

In this instance, in the benzophenone polyamide acid (BPAA), the molar concentration (mmol/L) of the carboxyl functional group was 6.27, and the molar concentration (mmol/L) of the amide functional group was 18.68. Thus, the mole ratio of the carboxyl functional group and the amide functional group was 1:3.

A 2032 Coin Type lithium-sulfur battery was prepared using the positive electrode, the negative electrode, the electrolyte and the separator.

### Example 3

### Positive electrode, negative electrode and electrolyte

A positive electrode, a negative electrode and an electrolyte were prepared by the same method as example 1.

### Separator

A polyethylene porous film (Celgard 2320) as a porous polymer substrate was prepared, a first solution comprising 1 wt% of 3,3'4,4'-benzophenone tetracarboxylic dianhydride (BPTCDA) as a carboxylic dianhydride compound in n-methylpyrrolidone (NMP) as a first solvent was prepared, and a second solution comprising 0.5 wt% of p-phenylenediamine (p-PDA) as a diamine compound in ethanol as a second solvent was prepared.

First, the porous polymer substrate was dipped in the prepared first solution for 1 hour, and the second solution was injected into the porous polymer substrate. As a result, a separator having a coating layer comprising benzophenone polyamide acid (BPAA) made via in-situ polymerization on two surfaces of the porous polymer substrate was prepared.

In this instance, in the benzophenone polyamide acid (BPAA), the molar concentration (mmol/L) of the carboxyl functional group was 12.54, and the molar concentration (mmol/L) of the amide functional group was 9.34. Thus, the mole ratio of the carboxyl functional group and the amide functional group was 1:0.75.

A 2032 Coin Type lithium-sulfur battery was prepared using the positive electrode, the negative electrode, the electrolyte and the separator.

### Comparative example 1

### Positive electrode, negative electrode and electrolyte

A positive electrode, a negative electrode and an electrolyte were prepared by the same method as example 1.

### Separator

For a porous polymer substrate, a polyethylene porous film (Celgard 2320) was used, and a separator without a coating layer comprising polyamide acid was used.

A 2032 Coin Type lithium-sulfur battery was prepared using the positive electrode, the negative electrode, the electrolyte and the separator.

### Comparative example 2

### Positive electrode, negative electrode and electrolyte

A positive electrode, a negative electrode and an electrolyte were prepared by the same method as example 1.

### Separator

A polyethylene porous film (Celgard 2320) as a porous polymer substrate was prepared, a first solution comprising 5 wt% of 3,3'4,4'-benzophenone tetracarboxylic dianhydride (BPTCDA) as a carboxylic dianhydride compound in n-methylpyrrolidone (NMP) as a first solvent was prepared, and a second solution comprising 1 wt% of p-phenylenediamine (p-PDA) as a diamine compound in ethanol as a second solvent was prepared.

First, the porous polymer substrate was dipped in the prepared first solution for 1 hour, and the second solution was injected into the porous polymer substrate. As a result, a separator having a coating layer comprising benzophenone polyamide acid (BPAA) made via in-situ polymerization on two surfaces of the porous polymer substrate was prepared.

In this instance, in the benzophenone polyamide acid (BPAA), the molar concentration (mmol/L) of the carboxyl functional group was 62.69, and the molar concentration (mmol/L) of the amide functional group was 18.68. Thus, the mole ratio of the carboxyl functional group and the amide functional group was 1:0.3.

A 2032 Coin Type lithium-sulfur battery was prepared using the positive electrode, the negative electrode, the electrolyte and the separator.

### Comparative example 3

### Positive electrode, negative electrode and electrolyte

A positive electrode, a negative electrode and an electrolyte were prepared by the same method as example 1.

### Separator

A first solution comprising 1 wt% of 3,3'4,4'-benzophenone tetracarboxylic dianhydride (BPTCDA) as a carboxylic dianhydride compound in n-methylpyrrolidone (NMP) as a first solvent was mixed with a second solution comprising 1 wt% of p-phenylenediamine (p-PDA) as a diamine compound in ethanol as a second solvent to prepare a mixed solution, and the mixed solution was coated on two surfaces of a polyethylene porous film (Celgard 3230) as a porous polymer substrate to prepare a separator having a coating layer comprising benzophenone polyamide acid (BPAA) made via ex-situ polymerization on the two surfaces of the porous polymer substrate.

In this instance, in the benzophenone polyamide acid, the molar concentration (mmol/L) of the carboxyl functional group was 6.27, and the molar concentration (mmol/L) of the amide functional group was 9.34. Thus, the mole ratio of the carboxyl functional group and the amide functional group was 1: 1.5.

A 2032 Coin Type lithium-sulfur battery was prepared using the positive electrode, the negative electrode, the electrolyte and the separator.

### Comparative example 4

### Positive electrode, negative electrode and electrolyte

A positive electrode, a negative electrode and an electrolyte were prepared by the same method as example 1.

### Separator

A polyethylene porous film (Celgard 2320) as a porous polymer substrate was prepared, a first solution comprising 5 wt% of 3,3'4,4'-benzophenone tetracarboxylic dianhydride (BPTCDA) as a carboxylic dianhydride compound in n-methylpyrrolidone (NMP) as a first solvent was prepared, and a second solution comprising 1 wt% of p-phenylenediamine (p-PDA) as a diamine compound in ethanol as a second solvent was prepared.

First, the porous polymer substrate was dipped in the prepared first solution for 1 hour, and the second solution was injected into the porous polymer substrate. As a result, a separator having a coating layer comprising benzophenone polyamide acid (BPAA) made via in-situ polymerization on two surfaces of the porous polymer substrate was prepared.

In this instance, in the benzophenone polyamide acid (BPAA), the molar concentration (mmol/L) of the carboxyl functional group was 6.27, and the molar concentration (mmol/L) of the amide functional group was 37.62. Thus, the mole ratio of the carboxyl functional group and the amide functional group was 1:6.

A 2032 Coin Type lithium-sulfur battery was prepared using the positive electrode, the negative electrode, the electrolyte and the separator.

### Evaluation result

### 1. Measurement of molar concentration and mole ratio of carboxyl functional group and amide functional group

The molar concentration and the mole ratio of the carboxyl functional group and the amide functional group of the polyamide acid compound included in the coating layer of the separator prepared in examples 1 to 3 and comparative examples 1 to 4 was measured using 1H-NMR spectrometer in the following conditions.
- Instrument: AVANCE AC 400FT NMR spectrometer (Bruker)
- Measurement frequency: 400 MHz
- Measurement solvent: DMSO-d6
- Measurement temperature: 25°C

The results are shown in the following Table 1.

**[Table 1]**

| | Molar concentration of carboxyl functional group (mmol/L) | Molar concentration of amide functional group (mmol/L) | Mole ratio of carboxyl functional group : amide functional group | Coating thickness (nm) |
|---|---|---|---|---|
| Example 1 | 6.27 | 9.34 | 1:1.5 | 60~100 |
| Example 2 | 6.27 | 18.68 | 1:3 | 40~50 |
| Example 3 | 12.54 | 9.34 | 1:0.75 | 70~110 |
| Comparative example 1 | 0 | 0 | - | - |
| Comparative example 2 | 62.69 | 18.68 | 1:0.3 | 200~350 |
| Comparative example 3 (ex-situ polymerization) | 6.27 | 9.34 | 1:1.5 | 110~150 |
| Comparative example 4 | 6.27 | 37.62 | 1:6 | 40~50 |

### 2. Life characteristics (cycling characteristics) evaluation

### Evaluation method

The lithium-sulfur batteries prepared in examples 1 to 3 and comparative examples 1 to 4 were charged·discharged at 60°C in the following conditions, and initial discharge capacity and discharge capacity after 100 cycles was evaluated.

### 1-3 cycles

Charge condition: CC (constant current)/CV(constant voltage), (4.25V, 0.1C current cut-off)
Discharge condition: CC (constant current) condition 3V 0.1C

### 4-100 cycles

Charge condition: CC (constant current)/CV(constant voltage), (4.25V, 0.2C current cut-off)
Discharge condition: CC (constant current) condition 3V 0.2C

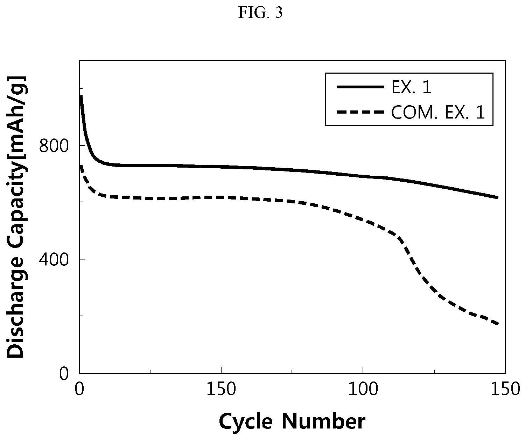

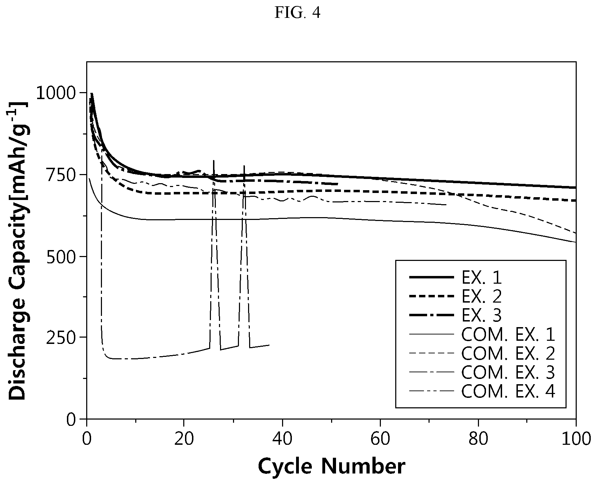

The results are shown in FIGS. 3 and 4.

Referring to FIG. 3, the lithium-sulfur battery according to example 1 had higher initial discharge capacity than the lithium-sulfur battery according to comparative example 1 when measured. For example, the initial discharge capacity of the lithium-sulfur battery according to example 1 was approximately 800 mAh/g, while the initial discharge capacity of the lithium-sulfur battery according to comparative example 1 was approximately 650 mAh/g.

Additionally, the lithium-sulfur battery according to example 1 had higher discharge capacity for approximately 10 cycles to 100 cycles than the lithium-sulfur battery according to comparative example 1 when measured, and after approximately 100 cycles, the lithium-sulfur battery according to example 1 maintained the discharge capacity at approximately 600 mAh/g or more, while the lithium-sulfur battery according to comparative example 1 reduced in discharge capacity down to approximately 200 mAh/g when measured.

Referring to FIG. 4, the lithium-sulfur batteries according to examples 1, 2 and 3 steadily maintained the discharge capacity of approximately 750 mAh/g or more for approximately 1 cycle to 100 cycles when measured.

In contrast, the lithium-sulfur battery according to comparative example 1 had relatively low discharge capacity of approximately 600 mAh/g for approximately 1 cycle to 100 cycles when measured, and the lithium-sulfur battery according to comparative example 2 maintained the discharge capacity of 750 mAh/g or more for approximately 70 cycles, but its discharge capacity rapidly dropped down to approximately 520 mAh/g for approximately 70 cycles to 100 cycles. Additionally, the lithium-sulfur battery according to comparative example 3 showed unstable results when measured; it had the discharge capacity of about 800 mAh/g for approximately 1 cycle to 3 cycles, and after a rapid drop, low discharge capacity of approximately 250 mAh/g or less for approximately 4 cycles to 40 cycles when measured, and the discharge capacity rapidly rose up to approximately 250 mAh/g near approximately 25 cycles and approximately 30 cycles. Additionally, the lithium-sulfur battery according to comparative example 4 maintained the discharge capacity of approximately 750 mAh/g for approximately 10 cycles, but after 70 cycles, the discharge capacity rapidly dropped, leading to failure to measure.

### 3. Thermal stability evaluation

### Evaluation method

The color change and shrinkage in the separators prepared in example 1 and comparative example 1 as a function of a change in temperature between 100°C and 150°C was observed with the naked eye.

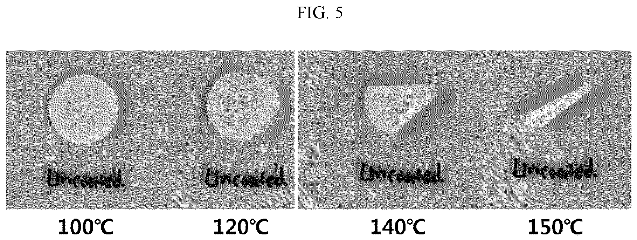

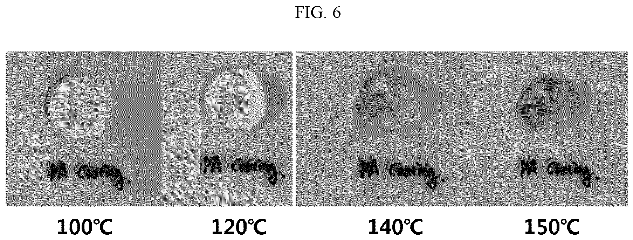

The results are shown in FIGS. 5 and 6.

Referring to FIG. 5, the separator according to comparative example 1 showed shrinkage and warpage as the temperature rises, and had no color change.

Referring to FIG. 6, the separator according to example 1 hardly showed shrinkage and warpage as the temperature rises, and showed a color change due to oxidation of the polyamide acid coated on the separator.

### 4. Polysulfide elution suppression test

### Evaluation method

Each of the separators prepared in example 1 and comparative example 1 was placed at a cap of a mini vial having an opening, and an electrolyte solution comprising polysulfide was present in the mini vial. The mini vial was placed in a chamber containing an electrolyte solution (bare electrolyte) without polysulfide, and then turned upside down such that the cap contacts the electrolyte solution.

After placed untouched for 24 hours to cause diffusion through the separator, the separator was taken out and the surface of contact with the electrolyte solution without polysulfide was analyzed by UV/Vis spec. Through the analysis, whether the polysulfide in the vial eluted out through the separator was determined.

In this instance, the electrolyte solution (bare electrolyte) contains 1.0 M LiNO3 in a mixed solvent of 1,3-dioxolane (DOL) and 1,2-dimethylether at a volume ratio (v/v) of 50 : 50.

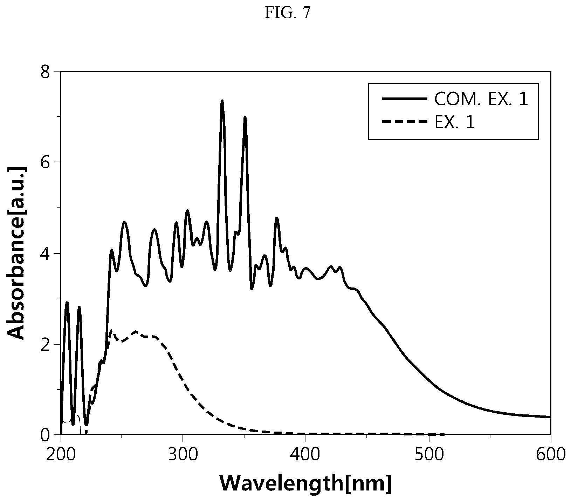

The results are shown in FIG. 7.

In the case of the separator of example 1, since elution of the polysulfide present in the mini vial was suppressed, no peak was found in UV/Vis spectrum or the intensity was low, while in the case of the separator of comparative example 1, since elution of polysulfide occurred, peaks were observed in UV/Vis spectrum and the intensity was high.

## Claims

1. A method of manufacturing a separator for a lithium-sulfur battery, comprising:
preparing a porous polymer substrate having a plurality of pores; and
forming a coating layer comprising an aromatic polyamide acid compound having a carboxyl functional group and an amide functional group on at least one surface of the porous polymer substrate,
wherein forming the coating layer comprising the aromatic polyamide acid compound comprises:
dipping the porous polymer substrate in a first solution comprising a carboxylic dianhydride compound; and
dipping the porous polymer substrate dipped in the first solution in a second solution comprising a diamine compound, and
wherein a mole ratio of the carboxyl functional group and the amide functional group is 1:0.5 to 1:5,
wherein when forming the coating layer comprising the aromatic polyamide acid compound on the at least one surface of the porous polymer substrate, the coating layer of the aromatic polyamide acid compound is formed on the at least one surface of the porous polymer substrate, and at the same time, the aromatic polyamide acid compound is present in the pores,
wherein the aromatic polyamide acid compound comprises a chemical structure represented by the following Formula 2 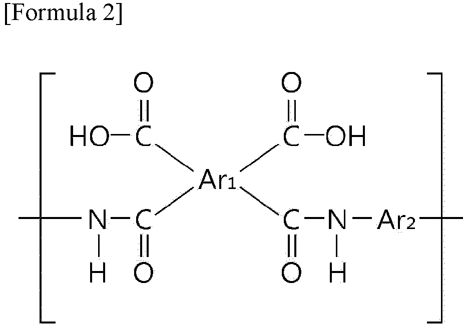
wherein in Formula 2, Ar1 is a quadrivalent aromatic organic group having 6 to 20 carbon atoms, and Ar2 is a divalent aromatic organic group having 6 to 20 carbon atoms.

2. The method of manufacturing the separator for the lithium-sulfur battery according to claim 1, wherein the mole ratio of the carboxyl functional group and the amide functional group is 1:0.75 to 1:3.

3. The method of manufacturing the separator for the lithium-sulfur battery according to claim 1, wherein an amount of the carboxylic dianhydride compound in the first solution is 0.2 wt% to 3 wt%, and
wherein an amount of the diamine compound in the second solution is 0.2 wt% to 3 wt%.

4. The method of manufacturing the separator for the lithium-sulfur battery according to claim 1, wherein the carboxyl functional group originates from the carboxylic dianhydride compound, and the amide functional group originates from the diamine compound.

5. The method of manufacturing the separator for the lithium-sulfur battery according to claim 4, wherein the carboxylic dianhydride compound comprises at least one of 3,3',4,4'-benzophenone tetracarboxylic dianhydride, 3,3',4,4'-diphenyltetracarboxylic dianhydride, 3,3',4,4'-diphenylsulfonetetracarboxylic dianhydride, 2,2-bis[4-(3,4-dicarboxyphenoxy)phenyl]propane dianhydride, 1,2,3,4-benzenetetracarboxylic dianhydride, or naphthalene-1,4,5,8-tetracarboxylic dianhydride, and
wherein the diamine compound comprises at least one of p-phenylene diamine, m-phenylene diamine, 2,2'-bis(trifluoromethyl)-4,4'-biphenyldiamine, 2,2'-dimethyl-4,4'-diaminobenzidine, 4,4'-diaminodiphenyl sulfone, 2,7-diaminofluorene, 4,4-diaminooctafluorobiphenyl, 4,4'-oxydianiline, 2,2'-dimethyl-4,4'-diaminobiphenyl, m-xylylenediamine, p-xylylenediamine or 4,4'-diaminobenzanilide.

6. The method of manufacturing the separator for the lithium-sulfur battery according to claim 1, wherein dipping the porous polymer substrate in the first solution and dipping the porous polymer substrate in the second solution are each performed for 40 minutes to 80 minutes.

7. A separator for a lithium-sulfur battery, obtainable by the method of claim 1, the separator comprising:
a porous polymer substrate having a plurality of pores; and
a coating layer on at least one surface of the porous polymer substrate, the coating layer comprising an aromatic polyamide acid compound having a carboxyl functional group and an amide functional group,
wherein a mole ratio of the carboxyl functional group and the amide functional group is 1:0.5 to 1:5,
wherein the aromatic polyamide acid compound comprises a chemical structure represented by the following Formula 2 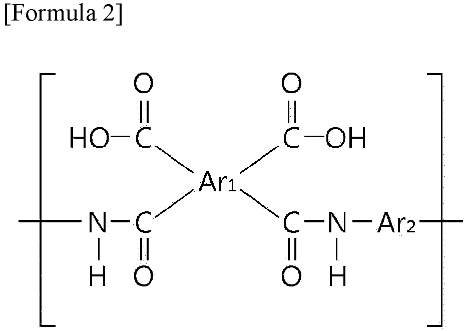
wherein in Formula 2, Ar1 is a quadrivalent aromatic organic group having 6 to 20 carbon atoms, and Ar2 is a divalent aromatic organic group having 6 to 20 carbon atoms.

8. The separator for the lithium-sulfur battery according to claim 7, wherein the mole ratio of the carboxyl functional group and the amide functional group is 1:0.75 to 1:3.

9. The separator for the lithium-sulfur battery according to claim 7, wherein the aromatic polyamide acid compound is a polymer having a unit having the carboxyl functional group and the amide functional group as a repeating unit.

10. The separator for the lithium-sulfur battery according to claim 7, wherein a molar concentration (mmol/L) of the carboxyl functional group is 5 to 15, and
wherein a molar concentration of the amide functional group is 8 to 20.

11. The separator for the lithium-sulfur battery according to claim 7, wherein a Poly Dispersity Index (PDI) of the aromatic polyamide acid is 2.6 to 3.2.

12. A lithium-sulfur battery, comprising:
a positive electrode, a negative electrode, and a separator interposed between the positive electrode and the negative electrode,
wherein the separator is the separator for the lithium-sulfur battery according to any one of claims 7 to 11.

## Patentansprüche

1. Verfahren zur Herstellung eines Separators für eine Lithium-Schwefel-Batterie, umfassend:
Herstellen eines porösen Polymersubstrats mit einer Vielzahl von Poren; und
Bilden einer Beschichtungsschicht, umfassend eine aromatische Polyamidsäureverbindung mit einer funktionellen Carboxylgruppe und einer funktionellen Amidgruppe auf mindestens einer Oberfläche des porösen Polymersubstrats,
wobei das Bilden der Beschichtungsschicht, umfassend die aromatische Polyamidsäureverbindung, umfasst:
Eintauchen des porösen Polymersubstrats in eine erste Lösung, umfassend eine Carbonsäuredianhydridverbindung; und
Eintauchen des in die erste Lösung eingetauchten porösen Polymersubstrats in eine zweite Lösung, umfassend eine Diaminverbindung, und
wobei ein Molverhältnis der funktionellen Carboxylgruppe und der funktionellen Amidgruppe 1:0,5 bis 1:5 beträgt,
wobei, wenn die Beschichtungsschicht, umfassend die aromatische Polyamidsäureverbindung, auf der mindestens einen Oberfläche des porösen Polymersubstrats gebildet wird, die Beschichtungsschicht der aromatischen Polyamidsäureverbindung auf der mindestens einen Oberfläche des porösen Polymersubstrats gebildet wird und gleichzeitig die aromatische Polyamidsäureverbindung in den Poren vorhanden ist,
wobei die aromatische Polyamidsäureverbindung eine chemische Struktur umfasst, dargestellt durch die folgende Formel 2 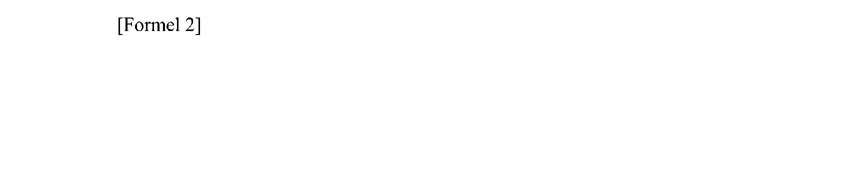 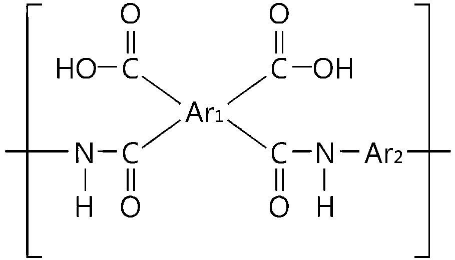
wobei in Formel 2 Ar1 eine vierwertige aromatische organische Gruppe mit 6 bis 20 Kohlenstoffatomen ist und Ar2 eine zweiwertige aromatische organische Gruppe mit 6 bis 20 Kohlenstoffatomen ist.

2. Verfahren zur Herstellung des Separators für die Lithium-Schwefel-Batterie nach Anspruch 1, wobei das Molverhältnis der funktionellen Carboxylgruppe und der funktionellen Amidgruppe 1:0,75 bis 1:3 beträgt.

3. Verfahren zur Herstellung des Separators für die Lithium-Schwefel-Batterie nach Anspruch 1, wobei eine Menge der Carbonsäuredianhydridverbindung in der ersten Lösung 0,2 Gew.-% bis 3 Gew.-% beträgt, und
wobei eine Menge der Diaminverbindung in der zweiten Lösung 0,2 Gew.-% bis 3 Gew.-% beträgt.

4. Verfahren zur Herstellung des Separators für die Lithium-Schwefel-Batterie nach Anspruch 1, wobei die funktionelle Carboxylgruppe von der Carbonsäuredianhydridverbindung stammt und die funktionelle Amidgruppe von der Diaminverbindung stammt.

5. Verfahren zur Herstellung des Separators für die Lithium-Schwefel-Batterie nach Anspruch 4, wobei die Carbonsäuredianhydridverbindung mindestens eines von 3,3',4,4'-Benzophenontetracarbonsäuredianhydrid, 3,3',4,4'-Diphenyltetracarbonsäuredianhydrid, 3,3',4,4'-Diphenylsulfontetracarbonsäuredianhydrid, 2,2-Bis[4-(3,4-dicarboxyphenoxy)phenyl]propandianhydrid, 1,2,3,4-Benzoltetracarbonsäuredianhydrid oder Naphthalin-1,4,5,8-tetracarbonsäuredianhydrid umfasst, und
wobei die Diaminverbindung mindestens eines von p-Phenylendiamin, m-Phenylendiamin, 2,2'-Bis(trifluormethyl)-4,4'-biphenyldiamin, 2,2'-Dimethyl-4,4'-diaminobenzidin, 4,4'-Diaminodiphenylsulfon, 2,7-Diaminofluoren, 4,4-Diaminooctafluorbiphenyl, 4,4'-Oxydianilin, 2,2'-Dimethyl-4,4'-diaminobiphenyl, m-Xylylendiamin, p-Xylylendiamin oder 4,4'-Diaminobenzanilid umfasst.

6. Verfahren zur Herstellung des Separators für die Lithium-Schwefel-Batterie nach Anspruch 1, wobei das Eintauchen des porösen Polymersubstrats in die erste Lösung und das Eintauchen des porösen Polymersubstrats in die zweite Lösung jeweils für 40 Minuten bis 80 Minuten durchgeführt werden.

7. Separator für eine Lithium-Schwefel-Batterie, erhältlich durch das Verfahren nach Anspruch 1, wobei der Separator umfasst:
ein poröses Polymersubstrat mit einer Vielzahl von Poren; und
eine Beschichtungsschicht auf mindestens einer Oberfläche des porösen Polymersubstrats, wobei die Beschichtungsschicht eine aromatische Polyamidsäureverbindung mit einer funktionellen Carboxylgruppe und einer funktionellen Amidgruppe umfasst,
wobei ein Molverhältnis der funktionellen Carboxylgruppe und der funktionellen Amidgruppe 1:0,5 bis 1:5 beträgt,
wobei die aromatische Polyamidsäureverbindung eine chemische Struktur umfasst, dargestellt durch die folgende Formel 2 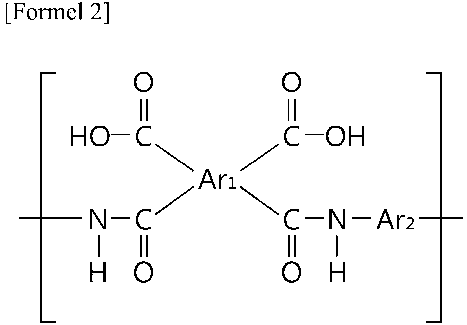
wobei in Formel 2 Ar1 eine vierwertige aromatische organische Gruppe mit 6 bis 20 Kohlenstoffatomen ist und Ar2 eine zweiwertige aromatische organische Gruppe mit 6 bis 20 Kohlenstoffatomen ist.

8. Separator für die Lithium-Schwefel-Batterie nach Anspruch 7, wobei das Molverhältnis der funktionellen Carboxylgruppe und der funktionellen Amidgruppe 1:0,75 bis 1:3 beträgt.

9. Separator für die Lithium-Schwefel-Batterie nach Anspruch 7, wobei die aromatische Polyamidsäureverbindung ein Polymer ist, das eine Einheit mit der funktionellen Carboxylgruppe und der funktionellen Amidgruppe als Wiederholungseinheit aufweist.

10. Separator für die Lithium-Schwefel-Batterie nach Anspruch 7, wobei eine molare Konzentration (mmol/l) der funktionellen Carboxylgruppe 5 bis 15 beträgt, und
wobei eine molare Konzentration der funktionellen Amidgruppe 8 bis 20 beträgt.

11. Separator für die Lithium-Schwefel-Batterie nach Anspruch 7, wobei ein Polydispersitätsindex (PDI) der aromatischen Polyamidsäure 2,6 bis 3,2 beträgt.

12. Lithium-Schwefel-Batterie, umfassend:
eine positive Elektrode, eine negative Elektrode und einen Separator, der zwischen der positiven Elektrode und der negativen Elektrode angeordnet ist,
wobei der Separator der Separator für die Lithium-Schwefel-Batterie nach einem der Ansprüche 7 bis 11 ist.

## Revendications

1. Procédé de fabrication d'un séparateur pour une batterie au lithium-soufre, consistant à :
préparer un substrat polymère poreux ayant une pluralité de pores ; et
former une couche de revêtement comprenant un composé d'acide polyamide aromatique ayant un groupe fonctionnel carboxylique et un groupe fonctionnel amide sur au moins une des surfaces du substrat polymère poreux,
dans lequel la formation de la couche de revêtement comprenant le composé d'acide polyamide aromatique consiste à :
tremper le substrat polymère poreux dans une première solution comprenant un composé de dianhydride carboxylique ; et
tremper le substrat polymère poreux trempé dans la première solution dans une deuxième solution comprenant un composé de diamine, et
dans lequel un rapport molaire du groupe fonctionnel carboxylique et du groupe fonctionnel amide est 1:0,5 à 1:5,
dans lequel, pendant la formation de la couche de revêtement comprenant le composé d'acide polyamide aromatique sur la ou les surfaces du substrat polymère poreux, la couche de revêtement du composé d'acide polyamide aromatique est formée sur la ou les surfaces du substrat polymère poreux, et en même temps, le composé d'acide polyamide aromatique est présent dans les pores,
dans lequel le composé d'acide polyamide aromatique comprend une structure chimique représentée par la Formule 2 ci-après 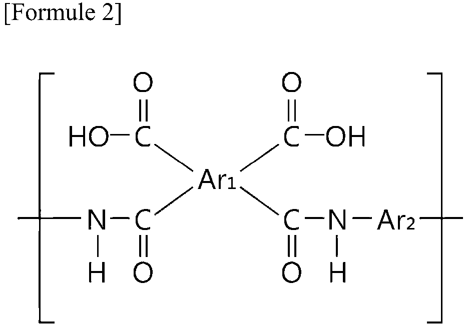
dans lequel dans la Formule 2, Ar1 est un groupe organique aromatique quadrivalent ayant 6 à 20 atomes de carbone, et Ar2 est un groupe organique aromatique divalent ayant 6 à 20 atomes de carbone.

2. Procédé de fabrication du séparateur pour la batterie au lithium-soufre selon la revendication 1, dans lequel le rapport molaire du groupe fonctionnel carboxylique et du groupe fonctionnel amide est 1:0,75 à 1:3.

3. Procédé de fabrication du séparateur pour la batterie au lithium-soufre selon la revendication 1, dans lequel une quantité du composé de dianhydride carboxylique dans la première solution est 0,2 % en poids à 3 % en poids, et
dans lequel une quantité du composé de diamine dans la deuxième solution est 0,2 % en poids à 3 % en poids.

4. Procédé de fabrication du séparateur pour la batterie au lithium-soufre selon la revendication 1, dans lequel le groupe fonctionnel carboxylique provient du composé de dianhydride carboxylique, et le groupe fonctionnel amide provient du composé de diamine.

5. Procédé de fabrication du séparateur pour la batterie au lithium-soufre selon la revendication 4, dans lequel le composé de dianhydride carboxylique comprend un ou plusieurs éléments parmi dianhydride de 3,3',4,4'-benzophénone tétracarboxylique, dianhydride de 3,3',4,4'-diphényltétracarboxylique, dianhydride de 3,3',4,4'-diphénylsulfonetétracarboxylique, dianhydride de 2,2-bis[4-(3,4-dicarboxyphenoxy)phényl]propane, dianhydride de 1,2,3,4-benzènetétracarboxylique ou dianhydride de naphtalène-1,4,5,8-tétracarboxylique, et
dans lequel le composé de diamine comprend un ou plusieurs éléments parmi p-phénylènediamine, m-phénylènediamine, 2,2'-bis(trifluorométhyl)-4,4'-biphényldiamine, 2,2'-diméthyl-4,4'-diaminobenzidine, 4,4'-diaminodiphénylsulfone, 2,7-diaminofluorène, 4,4-diaminooctafluorobiphényl, 4,4'-oxydianiline, 2,2'-diméthyl-4,4'-diaminobiphényl, m-xylylènediamine, p-xylylènediamine ou 4,4'-diaminobenzanilide.

6. Procédé de fabrication du séparateur pour la batterie au lithium-soufre selon la revendication 1, dans lequel le trempage du substrat polymère poreux dans la première solution et le trempage du substrat polymère poreux dans la deuxième solution sont chacun effectués pendant 40 minutes à 80 minutes.

7. Séparateur pour une batterie au lithium-soufre, pouvant être obtenu par le procédé selon la revendication 1, le séparateur comprenant :
un substrat polymère poreux ayant une pluralité de pores ; et
une couche de revêtement sur au moins une des surfaces du substrat polymère poreux, la couche de revêtement comprenant un composé d'acide polyamide aromatique ayant un groupe fonctionnel carboxylique et un groupe fonctionnel amide,
dans lequel un rapport molaire du groupe fonctionnel carboxylique et du groupe fonctionnel amide est 1:0,5 à 1:5,
dans lequel le composé d'acide polyamide aromatique comprend une structure chimique représentée par la Formule 2 ci-après 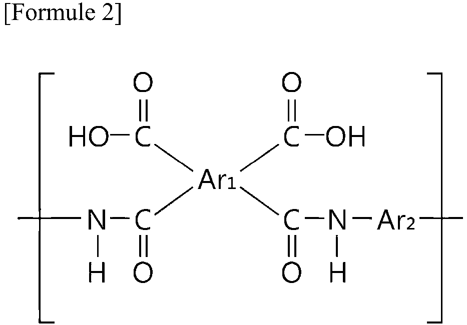
dans lequel dans la Formule 2, Ar1 est un groupe organique aromatique quadrivalent ayant 6 à 20 atomes de carbone, et Ar2 est un groupe organique aromatique divalent ayant 6 à 20 atomes de carbone.

8. Séparateur pour la batterie au lithium-soufre selon la revendication 7, dans lequel le rapport molaire du groupe fonctionnel carboxylique et du groupe fonctionnel amide est 1:0,75 à 1:3.

9. Séparateur pour la batterie au lithium-soufre selon la revendication 7, dans lequel le composé d'acide polyamide aromatique est un polymère ayant une unité ayant le groupe fonctionnel carboxylique et le groupe fonctionnel amide en tant qu'une unité de répétition.

10. Séparateur pour la batterie au lithium-soufre selon la revendication 7, dans lequel une concentration molaire (mmol/L) du groupe fonctionnel carboxylique est 5 à 15, et
dans lequel une concentration molaire du groupe fonctionnel amide est 8 à 20.

11. Séparateur pour la batterie au lithium-soufre selon la revendication 7, dans lequel un indice de polydispersité (PDI) de l'acide polyamide aromatique est 2,6 à 3,2.

12. Batterie au lithium-soufre, comprenant :
une électrode positive, une électrode négative et un séparateur interposé entre l'électrode positive et l'électrode négative,
dans lequel le séparateur est le séparateur pour la batterie au lithium-soufre selon l'une quelconque des revendications 7 à 11.
